# EUROPEAN PATENT SPECIFICATION

(11) **EP 3 471 379 B1**
(45) Date of publication and mention of the grant of the patent: **10.06.2020**
(21) Application number: 17196216.0
(22) Date of filing: 12.10.2017
(51) Int. Cl.: H04L 29/12, H04L 29/06

(54) **METHOD AND APPARATUSES FOR MULTI-IDENTITY SERVICE BASED ON REGISTRATION OF SHARED IDENTITIES**
VERFAHREN UND VORRICHTUNGEN FÜR EINEN DIENST MIT MEHREREN IDENTITÄTEN BASIEREND AUF DER REGISTRIERUNG VON GEMEINSAM GENUTZTEN IDENTITÄTEN
MÉTHODE ET APPAREILS DE SERVICE MULTI-IDENTITÉ BASÉES SUR L'ENREGISTREMENT D'IDENTITÉS PARTAGÉES

(43) Date of publication of application: 17.04.2019
(73) Proprietor: Deutsche Telekom AG, 53113 Bonn (DE)
(72) Inventor: Dennert, Thomas, 53844 Troisdorf (DE); Habermann, Steffen, 57635 Fiersbach (DE); Thelen, Jörg, 53604 Bad Honnef (DE); Bremer, Rainer, 53757 Sankt Augustin (DE)
(74) Representative: Vossius & Partner Patentanwälte Rechtsanwälte mbB

(56) References cited:
- EP-A1- 1 990 968
- US-A1- 2009 098 853
- "3rd Generation Partnership Project; Technical Specification Group Core Network and Terminals; IP Multimedia (IM) Subsystem Cx and Dx interfaces; Signalling flows and message contents (Release 14)", 3GPP STANDARD ; TECHNICAL SPECIFICATION ; 3GPP TS 29.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V14.4.0, 18 September 2017 (2017-09-18), pages 1-82, XP051336992, [retrieved on 2017-09-18]
- "3rd Generation Partnership Project; Technical Specification Group Core Network and Terminals; IP multimedia call control protocol based on Session Initiation Protocol (SIP) and Session Description Protocol (SDP); Stage 3 (Release 15)", 3GPP STANDARD ; TECHNICAL SPECIFICATION ; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V15.0.0, 22 September 2017 (2017-09-22), pages 1-987, XP051337134, [retrieved on 2017-09-22]
- ROSENBERG J ET AL: "SIP: Session Initiation Protocol", 20020601; 20020600, 1 June 2002 (2002-06-01), pages 1-269, XP015009039,
- "3rd Generation Partnership Project; Technical Specification Group Services and System Aspects; IP Multimedia Subsystem (IMS); Stage 2 (Release 15)", 3GPP STANDARD ; TECHNICAL SPECIFICATION ; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 18 September 2017 (2017-09-18), pages 1-328, XP051336966, [retrieved on 2017-09-18]

## Description

### TECHNICAL FIELD

In general, the invention relates to techniques for providing a multi-identity service within a communication network. More specifically, the invention relates to techniques for multi-identity service based on registration, in particular SIP registration, of shared identities. The disclosure particularly relates to a call session control server such as a proxy call session control server (P-CSCF) and a registration server for registering a multi-identity (ID) service within a communication network, in particular an IP multimedia subsystem (IMS). The invention further relates to user terminals and methods for providing the multi-identity service.

### BACKGROUND

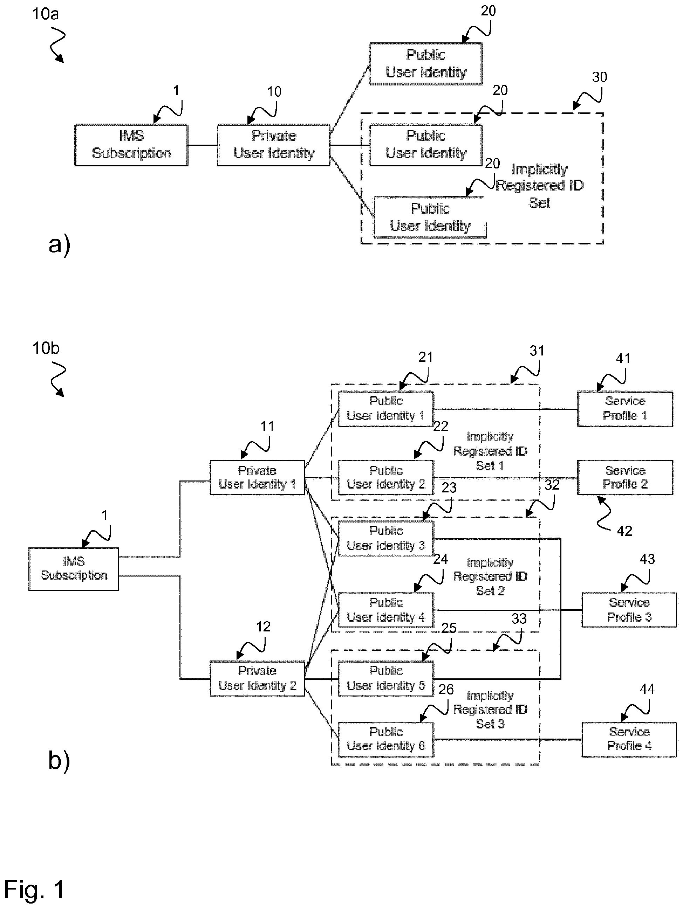

In a telephony network based on IMS technology the customer shall get the possibility to use for originating sessions/calls with the same terminal several originating identities. These identities can be composed of IDs shared with other users and personal IDs which are not shared, e.g. as illustrated in Fig. 1a. It shall be possible to choose the identity on per call basis. Potential applications for this are telephony services for groups (e.g. families or small enterprises), allowing calls for each group member with one personal device alternative by using his personal number (e.g. mobile number) or a number shared with the group (e.g. fixed line number of the family or the company).

The basic SIP standard (according to RFC 3261) gives the possibility to perform separate SIP registrations for each identity. In this case the same user/device will be stored with separate contacts for the given identities in the network (i.e. the registrar). IMS has been extended by the concept of the "implicit registration set" (IRS) as illustrated in Fig. 1a. Using an IRS allows to register with one registration different public identities (IMPUs) as illustrated in Fig. 1b.

This is in principle possible with SIP but increases the signaling load (separate registrations per identity) and the storage demand in the network due to the separate registration contexts. Off the shelf devices (especially mobile devices for the Voice over LTE service, VoLTE) do not support this natively. This would require service specific devices or software clients/apps.

The IMS data model allows the combination of different public user identities (IMPUs) into one implicit registration set (IRS) as illustrated in Fig. 1b. But if e.g. IMPU_A and IMPU_B belong to one IRS, this will be the case for all private Identities (IMPIs, i.e. devices) registering for one of the IMPUs.

The example given above cannot be implemented with the standard IMS data model as defined in 3GPP TS 23.228, 29.228 and with the processing of Registrations in the Call State Control Function (S-CSCF) as defined in TS 24.229.

If two family members (denoted as Alice and Bob) own one personal number each (denoted as IMPU_Alice and IMPU_Bob) and shall be able to use a family number (denoted as IMPU_family), this cannot be modelled within the IMS data model. If IMPU_Alice and IMPU_family belong to an IRS and IMPU_Bob and IMPU_family belong to an IRS, all three numbers need to belong to one IRS. IMPU_family cannot belong to two IRS with different other IMPUs. And if all three IMPUs belong to the same IRS this means that Alice can also use Bob's personal number and vice versa, which is not in line with the intended service behavior.

Furthermore 3GPP does not support sharing of an IMPU or an IRS between two IMS subscriptions. According to 3GPP TS 23.228 sharing of IMPUs/IRS is only possible between private user identities belonging to the same IMS subscription. This means for the example above that Alice, Bob and the family need to belong to the same IMS subscription. If e.g. Bob shall now also use the IMPU of another community (e.g. IMPU_company of his company) all these IMPUs need to belong to the same subscription, although Alice is completely independent from Bob's company.

EP1990968 A1 discloses operating a telecommunication system with a number of subscriptions wherein each subscription at least comprises a public identifier and a private identifier whereby at least one of the public identifiers is shared between at least two of the number of subscriptions.

### SUMMARY OF THE INVENTION

It is an object of the invention to provide a solution for a more flexible design for providing multi-identity service in a communication network that solves the problems mentioned above.

In particular, it is an object of the invention to provide a concept that allows the registration of multiple public identities with one registration transaction, in particular when using the IMS extension to the SIP protocol.

The foregoing and other objects are achieved by the subject matter of the independent claims. Further implementation forms are apparent from the dependent claims, the description and the figures.

A basic concept of the disclosure is implementing a communication network based on IMS technology in which the user or customer can use several originating identities for originating sessions/calls (i.e. a multi-identity service). These identities can be composed of IDs shared with other users and personal IDs which are not shared. The identity can be chosen by the user on a per call basis. Such communication network allows communication services for groups (e.g. families or small enterprises), allowing calls for each group member with one personal device alternative by using his personal number (e.g. mobile number) or a number shared with the group (e.g. fixed line number of the family or the company).

The new IMS model as described in this disclosure allows that there may exist one (or more) Public IDs that may be assigned to different implicit registration sets (IRS). For example, IMPU_Alice and IMPU_Familiy belonging to IRS1 and IMPU_Bob and IMPU_Family belonging to IRS2. The registration data may thus comprise a plurality of implicit registration sets, wherein at least one public user IDs of the registration data is associated to at least two different implicit registration sets.

The new IMS model as described in this disclosure further allows that a shared Public ID (shared IMPU) or a shared implicit registration set (IRS) can be shared between IMPIs of at least two different IMS subscriptions. For example, Bob belongs besides his family membership also to another community, e.g. his company sharing a Public ID with his colleagues, where the colleagues have also their own Public IDs. In the new IMS model according to the disclosure, there is no need that Bob, Alice and Bob's colleagues are associated to the same IMS subscription, instead they can be associated to different IMS subscriptions.

Hence, the disclosure describes the new IMS data model that removes the restrictions described above of the current IMS data model. The disclosure further describes a registrar (also denoted as registration server) that is able to interpret this new IMS data model and that can generate the implicit registration sets in the register response to SIP registration requests (e.g. as p-associated-URIs).

The solution may be based on standard IMS signaling on the User Network Interface (UNI), but with a non-standard user profile and the corresponding registration logic in the network. The solution may be based on the usage of the IMS extension to the SIP protocol to allow the registration of multiple public identities with ONE registration transaction.

These are in particular:
∘ the SIP header P-Associated-URI to signal one or more public identities of an implicit registration set in the response (200 ok) to the Register message.
∘ the SIP header P-Preferred-Identity to signal the intended public identities to be used as originating ID/calling party towards the network and the remote party during session setup in the Invite Message.

In contrast to the existing IMS standards the P-Associated-URIs can be composed by a network entity (i.e. the registrar) in a more flexible way than currently possible by a standard call state control function (S-CSCF) as defined in the 3GPP standard. It is especially possible to compose different implicit registration sets dependent on the registering private user identity in a way that a shared IMPU can be used with different non-shared IMPUs.

The disclosed solution allows the registration of combinations of shared and non-shared identities with one Registration transaction, which is not possible with the 3GPP user data model. The disclosed solution allows telephony products for groups of users with individually and commonly used telephone numbers with off the shelf IMS terminals without proprietary extensions.

According to a first aspect the invention relates to a call session control server, in particular a session initiation protocol (SIP) P-CSCF server, for providing a multi-identity (ID) service within a communication network, in particular an IP multimedia subsystem (IMS), the call session control server comprising a processor which is configured to: receive an originating request message, in particular a SIP invite message, from a user terminal, the originating request message comprising a destination public user ID and a selected originating public user ID; retrieve, from a registration server, registration data associated with a native public user ID of the user terminal; the registration data comprising multiple public user IDs associated with the user terminal, wherein the registration data comprises a plurality of implicit registration sets, wherein at least one public user ID of the registration data is associated to at least two different implicit registration sets; validate the selected originating public user ID against the registration data; and transmit the originating request message to the communication network if the selected originating public user ID is validated.

Such a call session control server provides a solution for a flexible design for providing multi-identity service in a communication network. The call session control server allows the registration of multiple public identities with one registration transaction, in particular when using the IMS extension to the SIP protocol. The call session control server can retrieve registration data associated with a native public user ID of the user terminal from a registration server. This registration data comprises multiple public user IDs associated with the user terminal. Hence, the call session control server can be implemented as a Proxy CSCF in a SIP/IMS communication network that can forward the originating request message to the corresponding SIP application server without the need of an S-CSCF.

Such a call session control server allows communication services for groups (e.g. families or small enterprises), allowing calls for each group member with one personal device alternative by using his personal number (e.g. mobile number) or a number shared with the group (e.g. fixed line number of the family or the company). The call session control server may be based on standard IMS signaling on the User Network Interface (UNI), but with a non-standard user profile and the corresponding registration logic in the network. The call session control server may be based on the usage of the IMS extension to the SIP protocol to allow the registration of multiple public identities with ONE registration transaction.

In an implementation form of the call session control server, the received originating request message comprises the selected originating public user ID in a message header, in particular a P-Preferred-Identity header of the received SIP invite message.

This provides the advantage that the user can select a desired originating public user ID, e.g. a source telephone number that shall be displayed on a display of the called party.

In an implementation form of the call session control server, the transmitted originating request message comprises the validated selected originating public user ID in a message header, in particular a P-Asserted-Identity header of the transmitted SIP invite message.

This provides the advantage that the selected originating public user ID is valid, i.e. an entry in the registration database exists for the user terminal or the user.

In an implementation form of the call session control server, the processor is configured to modify the originating request message if the selected originating public user ID is not validated; and transmit the modified originating request message to the communication network.

This provides the advantage that only valid originating public user IDs selected by the user are transported via the communication network to the called party.

In an implementation form of the call session control server, the processor is configured to replace the selected originating public user ID of the originating request message by the native public user ID of the user terminal if the originating request message is modified.

This provides the advantage that a non-valid originating request message is replaced by the native public user ID of the user terminal and hence, no invalid public user IDs are transported through the communication network.

In an implementation form of the call session control server, the registration data comprises an implicit registration set associated with the user terminal.

This provides the advantage that a set of Public User Identities may be assigned to a user or user terminal.

In an implementation form of the call session control server, the implicit registration set comprises at least one native public user ID of the user terminal and at least one virtual public user ID of the user terminal.

This provides the advantage that some Public User Identities may be assigned to one private user identity and some other Public User Identities or the same Public User Identities may be assigned to another private user identity. This provides a flexible design.

In an implementation form of the call session control server, the implicit registration set of the network database is asymmetrically structured.

An asymmetrically structured IRS provides a higher flexibility and supports the following scenario: Two family members (denoted as Alice and Bob) own one personal number each (denoted as IMPU_Alice and IMPU_Bob) and may use a family number (denoted as IMPU_family). IMPU_Alice and IMPU_family may belong to an IRS while IMPU_Bob and IMPU_family may belong to another IRS. There is no need that all three numbers need to belong to one IRS. IMPU_family can belong to two IRS with different other IMPUs. If all three IMPUs belong to the same IRS this gives the flexibility that Alice can also use Bob's personal number and vice versa.

In an implementation form of the call session control server, the processor is configured to: receive a terminating request message, in particular a SIP invite message, from the communication network, the terminating request message comprising a destination public user ID; retrieve registration data associated with the destination public user ID, wherein the registration data indicates at least one virtual public user ID; and route the terminating request message to a user terminal associated with the destination public user ID and to a user terminal associated with the at least one virtual public user ID.

This provides the advantage that a call can be routed to multiple user terminals according to the multi-identity service.

According to a second aspect, the invention relates to a user terminal for providing a multi-identity (ID) service within a communication network, in particular an IP multimedia subsystem (IMS), the user terminal comprising: a user interface configured to receive a user input comprising a destination public user ID and a selected originating public user ID, which are associated to different implicit registration sets; and a processor, configured to generate an originating request message, in particular a SIP invite message, wherein the originating request message comprises the destination public user ID and the selected originating public user ID; and a network interface, configured to transmit the originating request message to the communication network.

Such a user terminal provides a solution for a flexible design for providing multi-identity service in a communication network. Such a user terminal allows communication services for groups (e.g. families or small enterprises), allowing calls for each group member with one personal device alternative by using his personal number (e.g. mobile number) or a number shared with the group (e.g. fixed line number of the family or the company). The user terminal may be based on standard IMS signaling on the User Network Interface (UNI), but with a non-standard user profile and the corresponding registration logic in the network. The user terminal may be based on the usage of the IMS extension to the SIP protocol to allow the registration of multiple public identities with ONE registration transaction.

In an implementation form the user terminal comprises a multi-identity (ID) service application running on the processor to generate the originating request message.

This provides the advantage that by using the multi-identity service on the user terminal, e.g. a smartphone, simple devices can be applied that have a SIP/IMS interface. A mobile telephony module such as a GSM or UMTS or LTE chipset is not necessarily required. For example, over-the-top (OTT) devices may be applied.

According to a third aspect, the invention relates to a registration server for registering a multi-identity (ID) service within a communication network, in particular an IP multimedia subsystem (IMS), the registration server comprising: a database configured to store registration data associated with native public user IDs of user terminals, wherein the registration data comprises a plurality of implicit registration sets, wherein at least one public user ID of the registration data is associated to different implicit registration sets; and a processor configured to: receive a registration request from a call session control server, the registration request associated with a specific native public user ID of a user terminal; and transmit a registration response to the call session control server, the registration response comprising registration data associated with the specific native public user ID of the user terminal, wherein the registration data comprises the specific native public user ID of the user terminal and at least one virtual public user ID associated with the user terminal.

Such a registration server provides a solution for a flexible design for providing multi-identity service in a communication network. Such a registration server allows to efficiently resolve registration requests from a P-CSCF. An S-CSCF is not necessary for providing the multi-identity service in the communication network.

In an implementation form of the registration server, the registration data comprises implicit registration sets associated with the user terminals.

This provides the advantage that by using the implicit registration sets a set of Public User Identities may be assigned to a user or user terminal.

In an implementation form of the registration server, the implicit registration sets are asymmetrically structured.

An asymmetrically structured IRS provides a higher flexibility and supports the following scenario: Two family members (denoted as Alice and Bob) own one personal number each (denoted as IMPU_Alice and IMPU_Bob) and may use a family number (denoted as IMPU_family). IMPU_Alice and IMPU_family may belong to an IRS while IMPU_Bob and IMPU_family may belong to another IRS. If Bob shall not be allowed to use Alice's IMPU and vice versa the three numbers must not belong to one IRS. IMPU_family need to belong to two IRS with different other IMPUs. If all three IMPUs belong to the same IRS this gives the flexibility that Alice can also use Bob's personal number and vice versa.

According to a fourth aspect, the invention relates to a method for providing a multi-identity (ID) service within a communication network, in particular an IP multimedia subsystem (IMS), the method comprising: receiving an originating request message, in particular a SIP invite message, from a user terminal, the originating request message comprising a destination public user ID and a selected originating public user ID; retrieving, from a registration server, registration data associated with a native public user ID of the user terminal; the registration data comprising multiple public user IDs associated with the user terminal, wherein the registration data comprises a plurality of implicit registration sets, wherein at least one public user ID of the registration data is associated to different implicit registration sets; validating the selected originating public user ID against the registration data; and transmitting the originating request message to the communication network if the selected originating public user ID is validated.

Such a method provides a solution for a flexible design for providing multi-identity service in a communication network. The method allows the registration of multiple public identities with one registration transaction, in particular when using the IMS extension to the SIP protocol. The method allows to retrieve registration data associated with a native public user ID of the user terminal from a registration server. This registration data comprises multiple public user IDs associated with the user terminal. Hence, the method allows implementation of a call session control server as a Proxy CSCF in a SIP/IMS communication network that can forward the originating request message to the corresponding SIP application server without the need of an S-CSCF.

Such a method allows communication services for groups (e.g. families or small enterprises), allowing calls for each group member with one personal device alternative by using his personal number (e.g. mobile number) or a number shared with the group (e.g. fixed line number of the family or the company). The method may be based on standard IMS signaling on the User Network Interface (UNI), but with a non-standard user profile and the corresponding registration logic in the network. The method may be based on the usage of the IMS extension to the SIP protocol to allow the registration of multiple public identities with ONE registration transaction.

According to a fifth aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1a shows a block diagram 10a illustrating the concept of implicit registration and Public User Identities;
Figure 1b shows a block diagram 10b illustrating the concept of implicit registration and Public User IDs when multiple Private User IDs 11, 12 are involved;
Fig. 2 shows a block diagram illustrating the scenario 100 of a multi-identity service based on SIP registration of shared identities according to the disclosure;
Fig. 3 shows a message chart 200 illustrating multi line registration for a multi-identity service based on SIP registration of shared identities according to the disclosure;
Fig. 4 shows a block diagram illustrating an exemplary call session control server 400 according to the disclosure;
Fig. 5 shows a block diagram illustrating an exemplary registration server 500 according to the disclosure; and
Fig. 6 shows a block diagram illustrating an exemplary method 600 for providing a multi-identity (ID) service within a communication network according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

Fig. 1a shows a block diagram 10a illustrating the concept of implicit registration and Public User Identities. IMS subscription 1 can be performed for a private user identity 10 to which a set of public user entities are assigned to. Two public user entities 22, 23 are assigned to an implicit registration set 30 while one public user entity 21 is not assigned to the implicit registration set 30.

Figure 1b shows a block diagram 10b illustrating the concept of implicit registration and Public User IDs when multiple Private User IDs 11, 12 are involved. All Public User Identities of an Implicit Registration set 31, 32, 33 must be associated to the same Private User Identities 11, 12. When one of the Public User Identities, e.g. 21, within the set is registered, all Public User Identities 21, 22 associated with the implicit registration set 31 are registered at the same time. Public user identities belonging to an implicit registration set may point to different service profiles 41, 42, 43, 44; or some of these Public User Identities may point to the same service profile. When a Public User Identity belongs to an implicit registration set, it cannot be registered or deregistered individually without the Public User Identity being removed from the implicit registration list. According to 3GPP IMS specification all Public User Identities of an Implicit Registration set must be associated to the same Private User Identities.

According to 3GPP TS 23.228 sharing of IMPUs/IRS is only possible between private user identities belonging to the same IMS subscription.

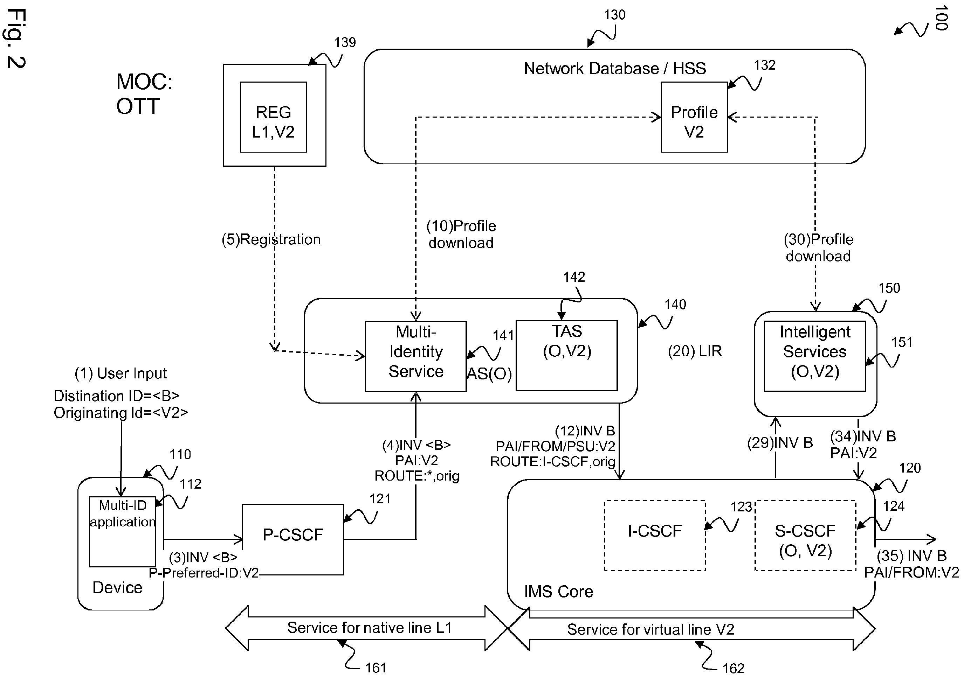

Fig. 2 shows a block diagram illustrating the scenario 100 of a multi-identity service based on SIP registration of shared identities according to the disclosure. The message sequences (1), (3), (4), (5), (10), (12), (29), (34), (35) illustrate the scenario of Originating SIP session with virtual originating identity <V2> in a communication network. Note that in this variant as illustrated in Fig. 2, the public user ID is an asserted ID validated by the P-CSCF 121. Hence on application level only V2 is used as public user ID.

The communication network or system includes an IMS core network 120 with the network nodes I-CSCF 123 and S_CSCF (O, V2) 124 and a P-CSCF 121 that is depicted in Fig. 2 outside the IMS core network 120, but may be part of the IMS core network 120. The communication network includes an application server AS(O) 140 with a multi-identity service 141 and Telephony application server TAS(O) 142. The communication network includes an application server 150 with Intelligent Services 151. Both application servers 140, 150 may be implemented as separate entities or as a single entity. The communication network includes a network database 130, e.g. a HSS (Home Subscription Server) with a profile V2 132. The communication network includes a registration database 139 with registration data REG V2 that may be part of the network database 130 or an external device (as depicted in Fig. 2). The communication network further includes a user terminal or user device 110 with a user interface for receiving a user input (1) and a multi-ID application 112. A network interface (not depicted) may be used to connect the terminal 110 with the P-CSCF 121.

When initiating an outgoing call, user A selects on the terminal 110 user interface the destination public identity (e.g. telephone number) B and the originating public identity (e.g. telephone number). The originating public identity (e.g. telephone number) may be the native public identity A (also denoted as L1) that belongs to the contract of user A or a virtual public identity V, e.g. V2 shown in Fig. 2, that belongs to a different contract. The Multi-ID application 112 on the user terminal 110 generates an originating request message, e.g. a SIP/IMS invite message (3) INV <B> with P-Preferred-Identity: V2 which is passed by the network interface to the P-CSCF 121 network node for SIP/IMS session control.

The originating public identity (SIP P-Preferred-Identity) applied by the user terminal 110 may be the native public identity A of user A or the virtual public identity of user A that can also be used as P-Preferred-Identity.

The distinct terminal function and the exact procedure for generating the initial INVITE (3) are not relevant for the disclosure. The request-URI may be constructed as sip-URI or as tel-URI. A request-URI that is represented in the sip-URI scheme may be a sip-URI representation of a telephone number or may have a different format.

P-CSCF 121 has received both P-Associated-Identities: L1, V2. The Client can select CgPty (Calling Party), i.e. its desired originating ID via UNI based on standardized methods. This is also possible for VoLTE devices as well, with migration to the new registration approach as described in this disclosure.

P-CSCF 121 has information about the application server 140, e.g. SIP application server, for user terminal 110 and forwards the originating request message to application server 140, e.g. as SIP/IMS invite message (4) INV <B> with PAI: V2 and Route:*,orig. The multi-Identity service 141 of application server 140 requests (5) the registration server 139 for registration data REG L1 of device 110 with native identity L1, downloads (6) profile information of L1 profile 131 stored at network database 130 and further downloads (10) profile information of V2 profile 132, i.e. the virtual identity V2 of user terminal 110, stored at network database 130. Based on this information, the application server 140 forwards the originating request message to IMS core 120, e.g. as SIP/IMS message (12) INV B with headers PAI/FROM/PSU:V2 and ROUTE: I-CSCF, orig.

The originating session set-up 100 is performed by the IMS core 120 as specified by the 3GPP procedures. P-CSCF and S-CSCF use the information that is available from the preceding registration of the originating user A and from retrieval of user profile information for user A from the HSS 130, if necessary.

In the next step the SIP application server 140 is triggered for serving an originating session that was initiated with the public identity V2. The public identity V2 may have an existing IMS registration or may not be registered in IMS. For the disclosure, it is not relevant how the triggering of the SIP application server 140 is realized. As a possible option the SIP application server 140 may send the INVITE (12) to S-CSCF 124. The S-CSCF 124 triggers the SIP application server 150 where the public identity V2 is served for the originating session.

The further session handling is performed as specified by the 3GPP IMS standards in the same way as if the native owner of the public identity V2 did initiate a session towards the destination identity B.

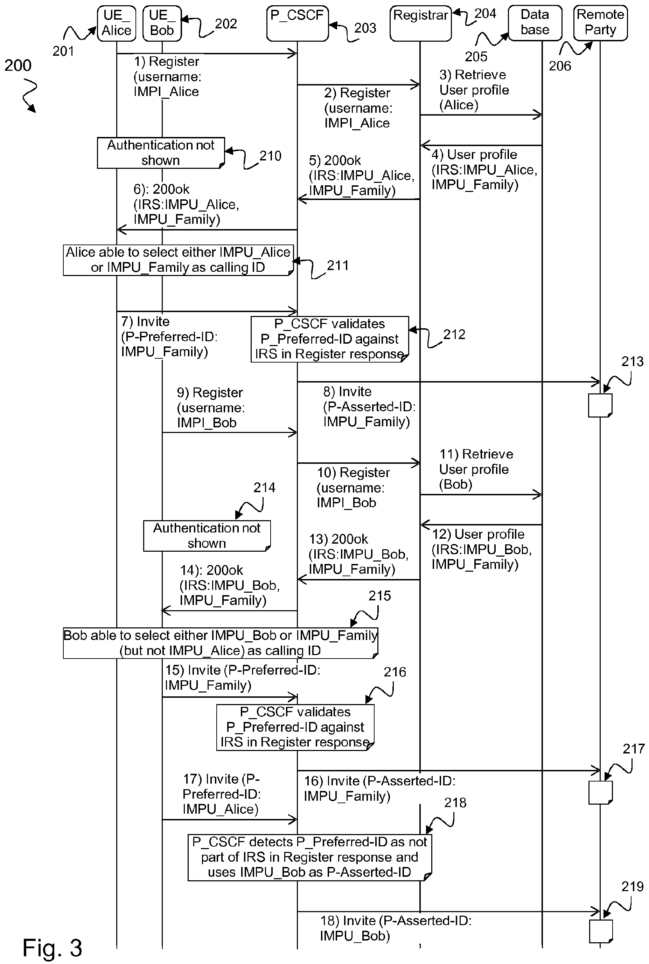

Fig. 3 shows a message chart 200 illustrating multi line registration for a multi-identity service based on SIP registration of shared identities according to the disclosure.

In the message chart 200 two family members (denoted as Alice and Bob) own one personal number each (denoted as IMPU_Alice and IMPU_Bob) and use a family number (denoted as IMPU_family). IMPU_Alice and IMPU_family may belong to one IRS and IMPU_Bob and IMPU_family may belong to another IRS. IMPU_family may also belong to two IRS with different other IMPUs. All three IMPUs may also belong to the same IRS, this means that Alice can also use Bob's personal number and vice versa.

The message chart 200 illustrates exemplary message implementation between a UE_Alice 201, a UE_Bob, a P_CSCF 203, a registrar 204, a data base 205 and a remote party 206. UE_Alice 201, a UE_Bob may be user terminal 110 as described above with respect to Fig. 2. P_CSCF 203 may be a proxy call session control server, e.g. a P_CSCF 121 as described above with respect to Fig. 2. The registrar 204 may be a registration server 139 as described above with respect to Fig. 2. The data base may be registration data REG L1 as described above with respect to Fig. 2. The remote party may be another user terminal 110 as described above with respect to Fig. 2.

The message chart 200 may include the exemplary steps (1) to (18) as depicted in Fig. 3. Steps (1) to (8) are related to registration and call establishment of Alice while steps (9) to (18) are related to registration and call establishment of Bob.

In the first step (1) UE_Alice 201 transmits a register message to P_CSCF 203 which includes username: IMPI_Alice. In step (2) P_CSCF 203 forwards the register message with username: IMPI_Alice to registrar 204 which retrieves the user profile of Alice from data base 205 (step 3). The data base 205 responds by transmitting the user profile, e.g. IRS:IMPU_Alice, IMPU_Family, to the registrar (step 4) which transmits the retrieved user profile to the P_CSCF 203 within a 200OK message (step 5). The P_CSCF 203 forwards the retrieved user profile to UE_Alice 201 within a 200OK message (step 6). Now, Alice is able to select either IMPU_Alice or IMPU_Family as calling ID when establishing a call 211. In step (7) UE_Alice 201 transmits an invite message to P_CSCF 203 which includes the header P-Preferred-ID: IMPU_Family. P_CSCF 203 validates P_Preferred-ID against IRS in register response 212 and transmits an invite message including P-Asserted-ID: IMPU_Family to the remote party 206 (step 8). The remote party 206 may respond 213 to this invite (not depicted in detail).

With respect to Bob, in step (9) UE_Bob 202 transmits a register message to P_CSCF 203 which includes username: IMPI_Bob. In step (10) P_CSCF 203 forwards the register message with username: IMPI_Bob to registrar 204 which retrieves the user profile of Bob from data base 205 (step 11). The data base 205 responds by transmitting the user profile, e.g. IRS:IMPU_Bob, IMPU_Family, to the registrar (step 12) which transmits the retrieved user profile to the P_CSCF 203 within a 200OK message (step 13). The P_CSCF 203 forwards the retrieved user profile to UE_Bob 202 within a 200OK message (step 14). Now, Bob is able to select either IMPU_Bob or IMPU_Family (but not IMPU_Alice) as calling ID when establishing a call 215.

In step (15) UE_Bob 202 transmits an invite message to P_CSCF 203 which includes the header P-Preferred-ID: IMPU_Family. P_CSCF 203 validates P_Preferred-ID against IRS in register response 216 and transmits an invite message including P-Asserted-ID: IMPU_Family to the remote party 206 (step 16). The remote party 206 may respond 217 to this invite (not depicted in detail).

In step (17) UE_Bob 202 transmits an invite message to P_CSCF 203 which includes the header P-Preferred-ID: IMPU_Alice. P_CSCF 203 validates P_Preferred-ID against IRS in register response 216 and detects that P_Preferred-ID is not part of IRS in register response and uses IMPU_Bob as P-Asserted-ID 218. Then P_CSCF 203 transmits an invite message including P-Asserted-ID: IMPU_Bob to the remote party 206 (step 18). The remote party 206 may respond 219 to this invite (not depicted in detail).

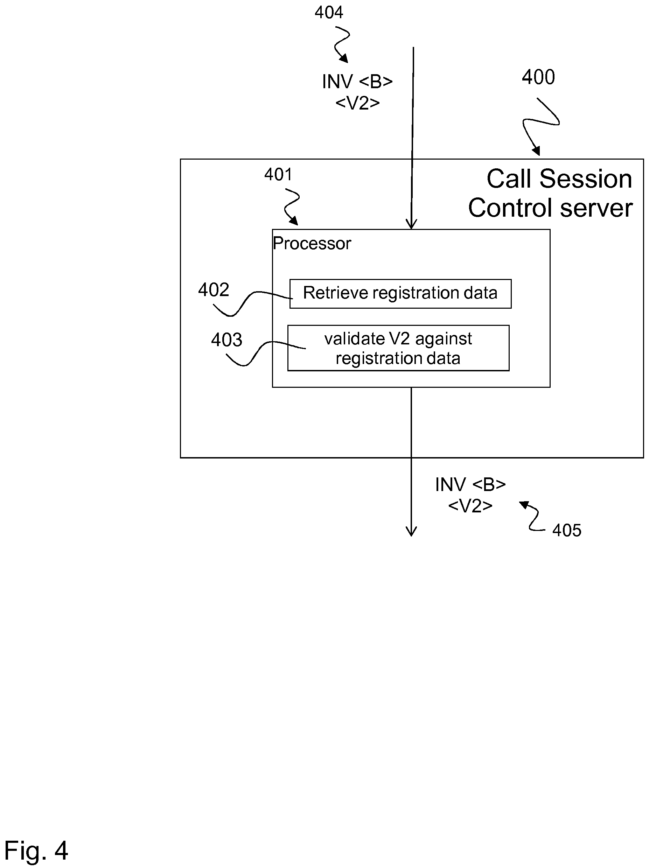

Fig. 4 shows a block diagram illustrating an exemplary call session control server 400 according to the disclosure. Such a call session control server 400 may correspond to the P-CSCF 121 as described above with respect to Fig. 2.

The call session control server 400 may be a session initiation protocol (SIP) P-CSCF server, e.g. a P-CSCF 121 as described above with respect to Figs. 2 and 3, for providing a multi-identity (ID) service within a communication network, in particular an IP multimedia subsystem (IMS). The call session control server 400 comprises a processor 401.

The processor 401 is configured to receive an originating request message 404, in particular a SIP invite message, from a user terminal 110, e.g. a user terminal 110 as depicted in Fig. 2 or user terminals 201, 202 as depicted in Fig. 3. The originating request message 404 comprises a destination public user ID <B> and a selected originating public user ID <V2>. A selected originating public user ID is an originating public user ID (e.g. a telephone number or an IMSI) that is selected by the user as his originating public user ID. The selected originating public user ID may be a native public user ID of the user, i.e. of the user terminal 110 or a virtual public user ID selected by the user.

The processor 401 is configured to retrieve 402, from a registration server, e.g. a registration server 139 as described above with respect to Fig. 2, registration data associated with a native public user ID of the user terminal 110. The registration data comprises multiple public user IDs associated with the user terminal 110. The processor 401 is configured to validate 403 the selected originating public user ID <V2> against the registration data; and transmit the originating request message 405 to the communication network if the selected originating public user ID <V2> is validated. A validation may mean that there exists an entry in the registration server for the selected originating public user ID <V2>, e.g. an entry associated with a native originating public user ID of the user terminal 110 or it user.

The received originating request message 404 may comprise the selected originating public user ID <V2> in a message header, in particular a P-Preferred-Identity header of the received SIP invite message 404. The transmitted originating request message 405 may comprise the validated selected originating public user ID <V2> in a message header, in particular a P-Asserted-Identity header of the transmitted SIP invite message 405.

The processor 401 may modify the originating request message 404 if the selected originating public user ID <V2> is not validated. The processor 401 may transmit the modified originating request message 405 to the communication network. For example, the processor 401 may replace the selected originating public user ID <V2> of the originating request message 404 by the native public user ID <L1> of the user terminal 110.

The registration data 503, e.g. REG L1 as depicted in Fig. 2, may comprise an implicit registration set, e.g. an implicit registration set 30, 31, 32, 33 as depicted in Figures 1a and 1b, associated with the user terminal 110. The implicit registration set 30, 31, 32, 33 may comprise at least one native public user ID <L1> of the user terminal 110 and one or more virtual public user IDs <V2> of the user terminal 110. The implicit registration set 30, 31, 32, 33 is asymmetrically structured (in contrast to the illustrations of Figures 1a and 1b).

For terminating sessions, the processor 401 may be configured to: receive a terminating request message, in particular a SIP invite message, from the communication network, wherein the terminating request message comprises a destination public user ID. The determination of the user terminals for terminating the call can be performed by the (multi-ID) application server, e.g. TAS (O, V2) 142 as depicted in Fig. 2. The application server 142 may route the terminating request message to a user terminal 110 associated with the destination public user ID and to a user terminal associated with the at least one virtual public user ID <V2>.

The user terminal 110 provides a multi-identity (ID) service within a communication network, in particular an IP multimedia subsystem (IMS). The user terminal 110 comprises: a network interface which receives the IRS from the registrar, a user interface configured to receive a user input comprising a destination public user ID <B> and a originating public user ID <V2> selected from the IRS; and a processor, configured to generate an originating request message 404, in particular a SIP invite message, wherein the originating request message 404 comprises the destination public user ID <B> and the selected originating public user ID <V2>; and a network interface, configured to transmit the originating request message 404 to the communication network. The user terminal 110 may comprise a multi-identity (ID) service application 112 running on the processor to generate the originating request message 404.

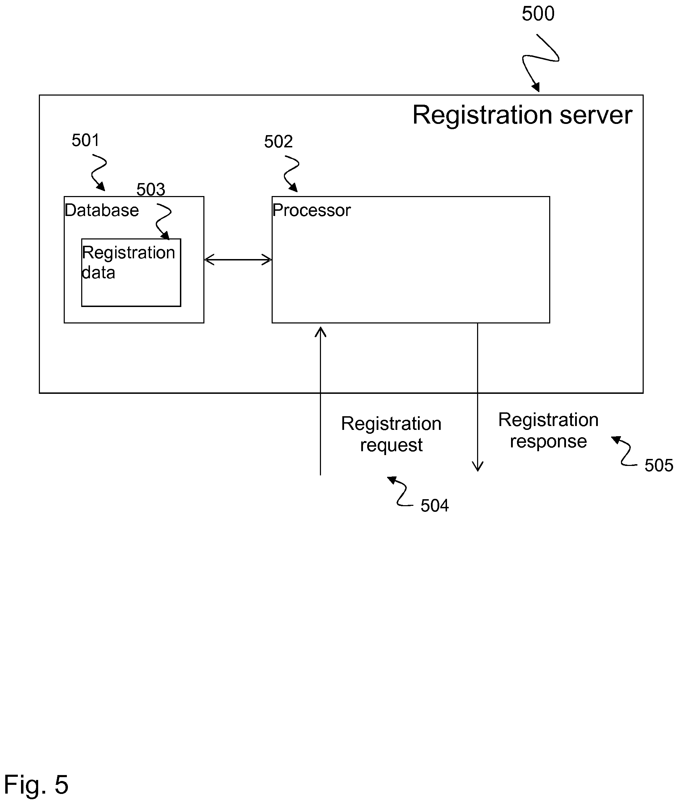

Fig. 5 shows a block diagram illustrating an exemplary registration server 500 according to the disclosure. Such a registration server 500 may correspond to the registration server 139 as described above with respect to Fig. 2.

The registration server 500 can register a multi-identity (ID) service within a communication network, in particular an IP multimedia subsystem (IMS). The registration server 500 comprises a database 501 and a processor 502. The database 501 is configured to store registration data 503 associated with native public user IDs of user terminals, e.g. user terminals 110 as depicted in Fig. 2. The processor 502 is configured to: receive a registration request 504 from a call session control server, e.g. a call session control server 400, 203, 121 as described above with respect to Figures 2, 3 and 4. The registration request 504 is associated with a specific native public user ID <L1> of a user terminal 110, e.g. as described above with respect to Figures 2 and 3. The processor 502 is configured to transmit a registration response 505 to the call session control server 400, 203 121. The registration response 505 comprises registration data 503 associated with the specific native public user ID <L1> of the user terminal 110. The registration data 503 comprises the specific native public user ID <L1> of the user terminal 110 and at least one virtual public user ID <V2> associated with the user terminal 110.

The registration data 503 may comprise implicit registration sets 30, 31, 32, 33 associated with the user terminals 110, e.g. as depicted in Figures 1a and 1b. The implicit registration sets 30, 31, 32, 33 are (in contrast to the illustration in Figures 1a and 1b) asymmetrically structured.

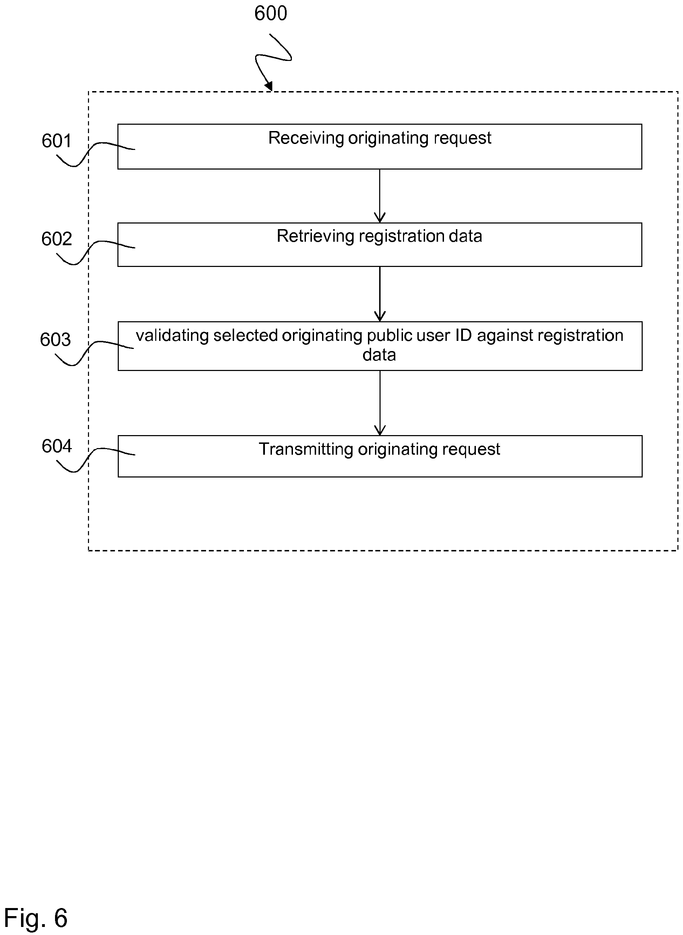

Fig. 6 shows a block diagram illustrating an exemplary method 600 for providing a multi-identity (ID) service within a communication network, e.g. an IMS network, according to the disclosure. The method 600 may be applied in a communication network according to the scenario 100 as described above with respect to Figure 2 or according to the message chart 200 as described above with respect to Fig. 3.

The method 600 includes receiving 601 an originating request message, in particular a SIP invite message, from a user terminal, the originating request message comprising a destination public user ID and a selected originating public user ID, e.g. as described above with respect to Figures 2 to 5.

The method 600 includes retrieving 602, from a registration server, registration data associated with a native public user ID of the user terminal; the registration data comprising multiple public user IDs associated with the user terminal, e.g. as described above with respect to Figures 2 to 5.

The method 600 includes validating 603 the selected originating public user ID against the registration data; and transmitting 604 the originating request message to the communication network if the selected originating public user ID is validated, e.g. as described above with respect to Figures 2 to 5.

Another aspect of the invention is related to a computer program product comprising program code for performing the method 600 or the message chart 200 described above, when executed on a computer or a processor. The methods 600, 200 may be implemented as program code that may be stored on a non-transitory computer medium.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A call session control server (400) for providing a multi-identity, ID, service within a communication network, the call session control server (400) comprising a processor (401) which is configured to:
receive an originating request message (404) from a user terminal (110), the originating request message (404) comprising a destination public user ID, <B>, and a selected originating public user ID, <V2>,;
retrieve (402), from a registration server (139), registration data associated with a native public user ID of the user terminal (110); the registration data comprising multiple public user IDs associated with the user terminal (110),
wherein the registration data comprises a plurality of implicit registration sets, wherein at least one public user ID of the registration data is associated to at least two different implicit registration sets;
validate (403) the selected originating public user ID, <V2>, against the registration data; and
transmit the originating request message (405) to the communication network if the selected originating public user ID, <V2>, is validated,
wherein the registration data comprises an implicit registration set (30, 31, 32, 33) associated with the user terminal (110),
wherein the implicit registration set (30, 31, 32, 33) comprises at least one native public user ID, <L1>, of the user terminal (110) and at least one virtual public user ID, <V2>, of the user terminal (110),
wherein the at least one native public user ID, <L1>, of the user terminal (110) belongs to a contract of the user and the at least one virtual public user ID, <V2>, of the user terminal (110) belongs to a different contract.

2. The call session control server (400) of claim 1,
wherein the received originating request message (404) comprises the selected originating public user ID, <V2>, in a message header of a received SIP invite message (404).

3. The call session control server (400) of claim 1 or 2,
wherein the transmitted originating request message (405) comprises the validated selected originating public user ID, <V2>, in a message header of a transmitted SIP invite message (405).

4. The call session control server (400) of one of the preceding claims, wherein the processor (401) is configured to:
modify the originating request message (404) if the selected originating public user ID, <V2>, is not validated; and
transmit the modified originating request message (405) to the communication network.

5. The call session control server (400) of claim 4,
wherein the processor (401) is configured to replace the selected originating public user ID, <V2>, of the originating request message (404) by the native public user ID, <L1>, of the user terminal (110).

6. The call session control server (400) of one of the preceding claims,
wherein the implicit registration set (30, 31, 32, 33) is asymmetrically structured.

7. The call session control server (400) of one of the preceding claims, wherein the processor (401) is configured to:
receive a terminating request message from the communication network, the terminating request message comprising a destination public user ID;
retrieve registration data associated with the destination public user ID, wherein the registration data indicates at least one virtual public user ID, <V2>; and
route the terminating request message to a user terminal (110) associated with the destination public user ID and to a user terminal associated with the at least one virtual public user ID, <V2>.

8. A registration server (500) for registering a multi-identity, ID, service within a communication network,
the registration server (500) comprising:
a database (501) configured to store registration data (503) associated with native public user IDs of user terminals (110), wherein the registration data (503) comprises a plurality of implicit registration sets, wherein at least one public user ID of the registration data is associated to at least two different implicit registration sets; and
a processor (502) configured to:
receive a registration request (504) from a call session control server (400, 121), the registration request (504) associated with a native public user ID, <L1>, of a user terminal (110); and
transmit a registration response (505) to the call session control server (400, 121), the registration response (505) comprising registration data (503) associated with the native public user ID, <L1>, of the user terminal (110), wherein the registration data (503) comprises the native public user ID, <L1>, of the user terminal (110) and at least one virtual public user ID, <V2>, associated with the user terminal (110),
wherein the registration data comprises an implicit registration set (30, 31, 32, 33) associated with the user terminal (110),
wherein the implicit registration set (30, 31, 32, 33) comprises at least one native public user ID, <L1>, of the user terminal (110) and at least one virtual public user ID, <V2>, of the user terminal (110),
wherein the native public user ID, <L1>, of the user terminal (110) belongs to a contract of the user and the virtual public user ID, <V2>, associated with the user terminal (110) belongs to a different contract.

9. The registration server (500) of claim 8,
wherein the registration data (503) comprises implicit registration sets (30, 31, 32, 33) associated with the user terminals (110).

10. The registration server (500) of claim 9,
wherein the implicit registration sets (30, 31, 32, 33) are asymmetrically structured.

11. The registration server (500) of claim 9 or 10, which allows sharing of public user identities between different IMS subscriptions.

12. A method (600) for use at a call session control server (400) for providing a multi-identity, ID, service within a communication network, the method comprising:
receiving (601) an originating request message from a user terminal, the originating request message comprising a destination public user ID and a selected originating public user ID;
retrieving (602), from a registration server, registration data associated with a native public user ID of the user terminal; the registration data comprising multiple public user IDs associated with the user terminal,
wherein the registration data comprises a plurality of implicit registration sets, wherein at least one public user ID of the registration data is associated to at least two different implicit registration sets;
validating (603) the selected originating public user ID against the registration data; and
transmitting (604) the originating request message to the communication network if the selected originating public user ID is validated,
wherein the registration data comprises an implicit registration set associated with the user terminal (110),
wherein the implicit registration set comprises at least one native public user ID of the user terminal and at least one virtual public user ID of the user terminal,
wherein the at least one native public user ID of the user terminal belongs to a contract of the user and the at least one virtual public user ID of the user terminal belongs to a different contract.

## Patentansprüche

1. Anrufsitzungssteuerserver (400) zur Bereitstellung eines Mehrfachidentitäts-, ID, Dienstes innerhalb eines Kommunikationsnetzwerks, wobei der Anrufsitzungssteuerserver (400) einen Prozessor (401) aufweist, der konfiguriert ist:
eine Ursprungsanforderungsnachricht (404) von einem Benutzerendgerät (110) zu empfangen, wobei die Ursprungsanforderungsnachricht (404) eine öffentliche Zielbenutzer-ID, <B>, und eine ausgewählte öffentliche Ursprungsbenutzer-ID, <V2>, aufweist;
von einem Registrierungsserver (139), Registrierungsdaten abzurufen (402), die mit einer nativen öffentliche Benutzer-ID des Benutzerendgeräts (110) verbunden sind;
wobei die Registrierungsdaten mehrere öffentliche Benutzer-IDs aufweisen, die mit dem Benutzerendgerät (110) verbunden sind,
wobei die Registrierungsdaten mehrere implizite Registrierungssätze aufweisen, wobei mindestens eine öffentliche Benutzer-ID der Registrierungsdaten mit mindestens zwei unterschiedlichen impliziten Registrierungssätzen verbunden ist;
die ausgewählte öffentliche Ursprungsbenutzer-ID, <V2>, an den Registrierungsdaten zu bestätigen (403); und
die Ursprungsanforderungsnachricht (405) an das Kommunikationsnetzwerk zu senden, wenn die ausgewählte öffentliche Ursprungsbenutzer-ID, <V2>, bestätigt wird,
wobei die Registrierungsdaten einen impliziten Registrierungssatz (30, 31, 32, 33) aufweisen, der mit dem Benutzerendgerät (110) verbunden ist,
wobei der implizite Registrierungssatz (30, 31, 32, 33) mindestens eine native öffentliche Benutzer-ID, <L1>, des Benutzerendgeräts (110) und mindestens eine virtuelle öffentliche Benutzer-ID, <V2>, des Benutzerendgeräts (110) aufweist,
wobei die mindestens eine native öffentliche Benutzer-ID, <L1>, des Benutzerendgeräts (110) zu einem Vertrag des Benutzers gehört und die mindestens eine virtuelle öffentliche Benutzer-ID, <V2>, des Benutzerendgeräts (110) zu einem anderen Vertrag gehört.

2. Anrufsitzungssteuerserver (400) nach Anspruch 1,
wobei die empfangene Ursprungsanforderungsnachricht (404) die ausgewählte öffentliche Ursprungsbenutzer-ID, <V2>, in einem Nachrichtenkopf einer empfangenen SIP-Einladungsnachricht (404) aufweist.

3. Anrufsitzungssteuerserver (400) nach Anspruch 1 oder 2,
wobei die gesendete Ursprungsanforderungsnachricht (405) die bestätigte ausgewählte öffentliche Ursprungsbenutzer-ID, <V2>, in einem Nachrichtenkopf einer gesendeten SIP-Einladungsnachricht (405) aufweist.

4. Anrufsitzungssteuerserver (400) nach einem der vorhergehenden Ansprüche, wobei der Prozessor (401) konfiguriert ist:
die Ursprungsanforderungsnachricht (404) zu modifizieren, wenn die ausgewählte öffentliche Ursprungsbenutzer-ID, <V2>, nicht bestätigt wird; und
die modifizierte Ursprungsanforderungsnachricht (405) an das Kommunikationsnetzwerk zu senden.

5. Anrufsitzungssteuerserver (400) nach Anspruch 4,
wobei der Prozessor (401) konfiguriert ist, die ausgewählte öffentliche Ursprungsbenutzer-ID, <V2>, der Ursprungsanforderungsnachricht (404) durch die native öffentliche Benutzer-ID, <L1>, des Benutzerendgeräts (110) zu ersetzen.

6. Anrufsitzungssteuerserver (400) nach einem der vorhergehenden Ansprüche, wobei der implizite Registrierungssatz (30, 31, 32, 33) asymmetrisch aufgebaut ist.

7. Anrufsitzungssteuerserver (400) nach einem der vorhergehenden Ansprüche, wobei der Prozessor (401) konfiguriert ist:
eine Abschlussanforderungsnachricht vom Kommunikationsnetzwerk zu empfangen, wobei die Abschlussanforderungsnachricht eine öffentliche Zielbenutzer-ID aufweist;
Registrierungsdaten abzurufen, die mit der öffentlichen Zielbenutzer-ID verbunden sind, wobei die Registrierungsdaten mindestens eine virtuelle öffentliche Benutzer-ID, <V2>, anzeigen; und
die Abschlussanforderungsnachricht an ein Benutzerendgerät (110), das mit der öffentliche Zielbenutzer-ID verbunden ist, und an ein Benutzerendgerät zu leiten, das mit der mindestens einen virtuellen öffentlichen Benutzer-ID, <V2>, verbunden ist.

8. Registrierungsserver (500) zum Registrieren eines Mehrfachidentitäts-, ID, Dienstes innerhalb eines Kommunikationsnetzwerks, wobei der Registrierungsserver (500) aufweist:
eine Datenbank (501), die konfiguriert ist, Registrierungsdaten (503) zu speichern, die mit nativen öffentlichen Benutzer-IDs von Benutzerendgeräten (110) verbunden sind, wobei die Registrierungsdaten (503) mehrere implizite Registrierungssätze aufweisen, wobei mindestens eine öffentliche Benutzer-ID der Registrierungsdaten mit mindestens zwei unterschiedlichen impliziten Registrierungssätzen verbunden ist; und
einen Prozessor (502), der konfiguriert ist:
eine Registrierungsanforderung (504) von einem Anrufsitzungssteuerserver (400, 121) zu empfangen, wobei die Registrierungsanforderung (504) mit einer nativen öffentlichen Benutzer-ID, <L1>, eines Benutzerendgeräts (110) verbunden ist; und
eine Registrierungsantwort (505) an den Anrufsitzungssteuerserver (400, 121) zu senden, wobei Registrierungsantwort (505) Registrierungsdaten (503) aufweist, die mit der nativen öffentlichen Benutzer-ID, <L1>, des Benutzerendgeräts (110) verbunden sind, wobei die Registrierungsdaten (503) die native öffentliche Benutzer-ID, <L1>, des Benutzerendgeräts (110) und mindestens eine virtuelle öffentliche Benutzer-ID, <V2>, aufweisen, die mit dem Benutzerendgerät (110) verbunden ist,
wobei die Registrierungsdaten einen impliziten Registrierungssatz (30, 31, 32, 33) aufweisen, der mit dem Benutzerendgerät (110) verbunden ist,
wobei der implizite Registrierungssatz (30, 31, 32, 33) mindestens eine native öffentliche Benutzer-ID, <L1>, des Benutzerendgeräts (110) und mindestens eine virtuelle öffentliche Benutzer-ID, <V2>, des Benutzerendgeräts (110) aufweist,
wobei die native öffentliche Benutzer-ID, <L1>, des Benutzerendgeräts (110) zu einem Vertrag des Benutzers gehört und die virtuelle öffentliche Benutzer-ID, <V2>, die mit dem Benutzerendgerät (110) verbunden ist, zu einem anderen Vertrag gehört.

9. Registrierungsserver (500) nach Anspruch 8,
wobei die Registrierungsdaten (503) implizite Registrierungssätze (30, 31, 32, 33) aufweisen, die mit den Benutzerendgeräten (110) verbunden sind.

10. Registrierungsserver (500) nach Anspruch 9,
wobei die impliziten Registrierungssätze (30, 31, 32, 33) asymmetrisch aufgebaut sind.

11. Registrierungsserver (500) nach Anspruch 9 oder 10, der die gemeinsame Nutzung von öffentlichen Benutzeridentitäten zwischen unterschiedlichen IMS-Abonnements ermöglicht.

12. Verfahren (600) zur Verwendung in einem Anrufsitzungssteuerserver (400) zur Bereitstellung eines Mehrfachidentitäts-, ID, Dienstes innerhalb eines Kommunikationsnetzwerks, wobei das Verfahren aufweist:
Empfangen (601) einer Ursprungsanforderungsnachricht von einem Benutzerendgerät, wobei die Ursprungsanforderungsnachricht eine öffentliche Zielbenutzer-ID und eine ausgewählte öffentliche Ursprungsbenutzer-ID aufweist;
Abrufen (602) von einem Registrierungsserver von Registrierungsdaten, die mit einer nativen öffentlichen Benutzer-ID des Benutzerendgeräts verbunden sind; wobei die Registrierungsdaten mehrere öffentliche Benutzer-IDs aufweisen, die mit dem Benutzerendgerät verbunden sind,
wobei die Registrierungsdaten mehrere implizite Registrierungssätze aufweisen, wobei mindestens eine öffentliche Benutzer-ID der Registrierungsdaten mit mindestens zwei unterschiedlichen impliziten Registrierungssätzen verbunden ist;
Bestätigen (603) der ausgewählten öffentlichen Ursprungsbenutzer-ID an den Registrierungsdaten; und
Senden (604) der Ursprungsanforderungsnachricht an das Kommunikationsnetzwerk, wenn die ausgewählte öffentliche Ursprungsbenutzer-ID bestätigt wird,
wobei die Registrierungsdaten einen impliziten Registrierungssatz aufweisen, der mit dem Benutzerendgerät (110) verbunden ist,
wobei der implizite Registrierungssatz mindestens eine native öffentliche Benutzer-ID des Benutzerendgeräts und mindestens eine virtuelle öffentliche Benutzer-ID des Benutzerendgeräts aufweist,
wobei die mindestens eine native öffentliche Benutzer-ID des Benutzerendgeräts zu einem Vertrag des Benutzers gehört und die mindestens eine virtuelle öffentliche Benutzer-ID des Benutzerendgeräts zu einem anderen Vertrag gehört.

## Revendications

1. Serveur de commande de session d'appel (400) destiné à fournir un service multi-identité ID à l'intérieur d'un réseau de communication, ledit serveur de commande de session d'appel (400) comprenant un processeur (401) prévu pour :
recevoir un message de demande d'origine (404) d'un terminal d'utilisateur (110), ledit message de demande d'origine (404) comprenant un ID d'utilisateur public de destination <B> et un ID d'utilisateur public d'origine sélectionné <V2> ;
extraire (402) d'un serveur d'enregistrement (139) des données d'enregistrement associées à un ID d'utilisateur public natif du terminal d'utilisateur (110) ; les données d'enregistrement comprenant plusieurs ID d'utilisateurs publics associés au terminal d'utilisateur (110),
où les données d'enregistrement comprennent une pluralité d'ensembles d'enregistrement implicites, où au moins un ID d'utilisateur public des données d'enregistrement est associé à au moins deux ensembles d'enregistrement implicites différents ;
valider (403) l'ID d'utilisateur public d'origine sélectionné <V2> relativement aux données d'enregistrement ; et
transmettre le message de demande d'origine (405) au réseau de communication si l'ID d'utilisateur public d'origine sélectionné <V2> est validé,
où les données d'enregistrement comprennent un ensemble d'enregistrement implicite (30, 31, 32, 33) associé au terminal d'utilisateur (110),
où l'ensemble d'enregistrement implicite (30, 31, 32, 33) comprend au moins un ID d'utilisateur public natif <L1> du terminal d'utilisateur (110) et au moins un ID d'utilisateur public virtuel <V2> du terminal d'utilisateur (110),
où ledit au moins un ID d'utilisateur public natif <L1> du terminal d'utilisateur (110) relève d'un contrat de l'utilisateur et ledit au moins un ID d'utilisateur public virtuel <V2> du terminal d'utilisateur (110) relève d'un contrat différent.

2. Serveur de commande de session d'appel (400) selon la revendication 1,
où le message de demande d'origine (404) reçu comprend l'ID d'utilisateur public d'origine sélectionné <V2> dans un en-tête de message d'un message d'invitation SIP (404) reçu.

3. Serveur de commande de session d'appel (400) selon la revendication 1 ou la revendication 2,
où le message de demande d'origine (405) transmis comprend l'ID d'utilisateur public d'origine sélectionné <V2> validé dans un en-tête de message d'un message d'invitation SIP (405) transmis.

4. Serveur de commande de session d'appel (400) selon l'une des revendications précédentes, où le processeur (401) est prévu pour :
modifier le message de demande d'origine (404) si l'ID d'utilisateur public d'origine sélectionné <V2> n'est pas validé ; et
transmettre le message de demande d'origine (405) modifié au réseau de communication.

5. Serveur de commande de session d'appel (400) selon la revendication 4,
où le processeur (401) est prévu pour remplacer l'ID d'utilisateur public d'origine sélectionné <V2> du message de demande d'origine (404) par l'ID d'utilisateur public natif <L1> du terminal d'utilisateur (110).

6. Serveur de commande de session d'appel (400) selon l'une des revendications précédentes, où l'ensemble d'enregistrement implicite (30, 31, 32, 33) est structuré asymétriquement.

7. Serveur de commande de session d'appel (400) selon l'une des revendications précédentes, où le processeur (401) est prévu pour :
recevoir un message de demande de fin du réseau de communication, ledit message de demande de fin comprenant un ID d'utilisateur public de destination ;
extraire des données d'enregistrement associées à l'ID d'utilisateur public de destination, lesdites données d'enregistrement indiquant au moins un ID d'utilisateur public virtuel <V2> ; et
acheminer le message de demande de fin à un terminal d'utilisateur (110) associé à l'ID d'utilisateur public de destination et à un terminal d'utilisateur associé audit au moins un ID d'utilisateur public virtuel <V2>.

8. Serveur d'enregistrement (500) destiné à enregistrer un service multi-identité ID à l'intérieur d'un réseau de communication, ledit serveur d'enregistrement (500) comprenant :
une base de données (501) prévue pour stocker des données d'enregistrement (503) associées à des ID d'utilisateurs publics natifs de terminaux d'utilisateur (110), les données d'enregistrement (503) comprenant une pluralité d'ensembles d'enregistrement implicites, où au moins un ID d'utilisateur public des données d'enregistrement est associé à au moins deux ensembles d'enregistrement implicites différents ; et
un processeur (502) prévu pour :
recevoir une demande d'enregistrement (504) du serveur de commande de session d'appel (400, 121), ladite demande d'enregistrement (504) étant associée à un ID d'utilisateur public natif <L1> d'un terminal d'utilisateur (110) ; et
transmettre une réponse d'enregistrement (505) au serveur de commande de session d'appel (400, 121), ladite réponse d'enregistrement (505) comprenant des données d'enregistrement (503) associées à l'ID d'utilisateur public natif <L1> du terminal d'utilisateur (110), les données d'enregistrement (503) comprenant l'ID d'utilisateur public natif <L1> du terminal d'utilisateur (110) et au moins un ID d'utilisateur public virtuel <V2> associé au terminal d'utilisateur (110),
où les données d'enregistrement comprennent un ensemble d'enregistrement implicite (30, 31, 32, 33) associé au terminal d'utilisateur (110),
où l'ensemble d'enregistrement implicite (30, 31, 32, 33) comprend au moins un ID d'utilisateur public natif <L1> du terminal d'utilisateur (110) et au moins un ID d'utilisateur public virtuel <V2> du terminal d'utilisateur (110),
où l'ID d'utilisateur public natif <L1> du terminal d'utilisateur (110) relève d'un contrat de l'utilisateur et l'ID d'utilisateur public virtuel <V2> associé au terminal d'utilisateur (110) relève d'un contrat différent.

9. Serveur d'enregistrement (500) selon la revendication 8,
où les données d'enregistrement (503) comprennent des ensembles d'enregistrement implicites (30, 31, 32, 33) associés aux terminaux d'utilisateur (110).

10. Serveur d'enregistrement (500) selon la revendication 9,
où les ensembles d'enregistrement implicites (30, 31, 32, 33) sont structurés de manière asymétrique.

11. Serveur d'enregistrement (500) selon la revendication 9 ou la revendication 10, permettant le partage d'identités d'utilisateurs publics entre différentes souscriptions IMS.

12. Procédé (600) applicable à un serveur de commande de session d'appel (400) destiné à fournir un service multi-identité ID à l'intérieur d'un réseau de communication, ledit procédé comprenant :
la réception (601) d'un message de demande d'origine d'un terminal d'utilisateur, ledit message de demande d'origine comprenant un ID d'utilisateur public de destination et un ID d'utilisateur public d'origine sélectionné ;
l'extraction (602) d'un serveur d'enregistrement, de données d'enregistrement associées à un ID d'utilisateur public natif du terminal d'utilisateur ; les données d'enregistrement comprenant plusieurs ID d'utilisateurs publics associés au terminal d'utilisateur,
où les données d'enregistrement comprennent une pluralité d'ensembles d'enregistrement implicites, au moins un ID d'utilisateur public des données d'enregistrement étant associé à au moins deux ensembles d'enregistrement implicites différents ;
la validation (603) de l'ID d'utilisateur public d'origine sélectionné relativement aux données d'enregistrement ; et
la transmission (604) du message de demande d'origine au réseau de communication si l'ID d'utilisateur public d'origine sélectionné est validé,
où les données d'enregistrement comprennent un ensemble d'enregistrement implicite associé au terminal d'utilisateur (110),
où l'ensemble d'enregistrement implicite comprend au moins un ID d'utilisateur public natif du terminal d'utilisateur et au moins un ID d'utilisateur public virtuel du terminal d'utilisateur,
où ledit au moins un ID d'utilisateur public natif du terminal d'utilisateur relève d'un contrat de l'utilisateur et ledit au moins un ID d'utilisateur public virtuel du terminal d'utilisateur relève d'un contrat différent.
